# EUROPEAN PATENT APPLICATION

(11) **EP 1 163 990 A2**
(43) Date of publication of application: **19.12.2001**
(21) Application number: 01113519.1
(22) Date of filing: 12.06.2001
(51) Int. Cl.: B29C 44/18, B65B 9/06

(54) **Method for enclosing a foamable composition in a flexible bag**

(30) Priority: 12.06.2000 US 591830
(71) Applicant: SEALED AIR CORPORATION, Saddle Brook New Jersey 07663 (US)
(72) Inventor: Oberle, Timothy T., Brookfield, CT 06804 (US); Pillote, Lawrence J., Southbury, CT 06488 (US); Wheeler, Robert D., Fairfield, CT 06430 (US); McKinley, Kerry M., New Fairfield, CT 06812 (US)
(74) Representative: UEXKÜLL & STOLBERG

(57) **Abstract**

A method for enclosing a foamable composition in a flexible bag includes forming a tube from one or two sheets (10,12) of flexible film, introducing the foamable composition (44) into the tube, and closing the tube to form a bag (36) in which the foamable composition is enclosed. One or two longitudinal seals (42a,42b) are formed on the bag (one seal if one film is used and two seals if two films are used) by applying a coating of a bonding material, e.g., an adhesive or cohesive material, to the longitudinal edges of the film(s) and squeezing the bonding material together as the tube is being formed and filled with a foamable composition.

## Description

### BACKGROUND OF THE INVENTION

The present invention relates to foam-in-place packaging and, more particularly, to an improved method for making foam-in-place packaging cushions.

Foam-in-place packaging is a highly useful technique for on-demand protection of packaged objects. In its most basic form, foam-in-place packaging comprises injecting foamable compositions from a dispenser into a container that holds an object to be cushioned. Typically, the object is wrapped in plastic to keep it from direct contact with the rising (expanding) foam. As the foam rises, it expands into the remaining space between the object and its container (e.g. a corrugated board box) thus forming a custom cushion for the object.

A common foamable composition is formed by mixing an isocyanate compound with a hydroxyl-containing material, such as a polyol (i.e., a compound that contains multiple hydroxyl groups), typically in the presence of water and a catalyst. The isocyanate and polyol precursors react to form polyurethane. At the same time, the water reacts with the isocyanate compound to produce carbon dioxide. The carbon dioxide causes the polyurethane to expand into a foamed cellular structure, i.e., a polyurethane foam, which serves to protect the packaged object.

In other types of foam-in-place packaging, an automated device produces flexible bags from flexible, plastic film and dispenses a foamable composition into the bags as the bags are being formed. As the composition expands into a foam within the bag, the bag is sealed shut and typically dropped into a container holding the object to be cushioned. The rising foam again tends to expand into the available space, but does so inside the bag. Because the bags are formed of flexible plastic, they form individual custom foam cushions around the packaged objects. Exemplary devices are assigned to the assignee of the present invention, and are illustrated, for example, in U.S. Pat. Nos. 4,800,708, 4,854,109, 5,027,583, 5,376,219, and 6,003,288, the contents of each of which are incorporated entirely herein by reference.

As will be noted from the foregoing patents, the typical method of forming a foam-in-place cushion from a plastic bag is to heat seal sheets of plastic film material together both transversely and longitudinally as they are being fed from a stock supply to form a generally rectangular bag with the foam inside. In alternative embodiments, the stock supply of plastic film material can be fed in center folded fashion so that one side of the bag is a fold, rather than a heat seal. Foam-in-place packaging devices which operate in accordance with such methods have gained rapid and wide acceptance in the marketplace and have served their purposes well.

While heat sealing has generally proven to be an effective technique for producing a seal, it is not without shortcomings. For example, the task of heat sealing plastic requires a careful balance between supplying sufficient heat to seal the plastic while avoiding the amount of heat that would sever the plastic. In turn, this balance requires that heat sealing equipment will usually require adjustment to accommodate different thicknesses or gauges of plastic film material. Furthermore, in order to avoid severing, the heat seals that are formed may be somewhat weaker than would otherwise be desired. Additionally, plastic film material often has inconsistent properties from roll to roll and even within a given roll so that even a sensitive heat seal adjustment may often fail to either completely seal the plastic or will entirely sever it. As another consideration, heat sealing tends to be more reliable for large volume, rapidly repetitive (i.e. continuous) cushion manufacturing, but is less reliable for the intermittent cushion bag formation that many packagers require or desire. Finally, heat sealing raises maintenance and reliability problems. For example, plastic material can quickly build up on a heating system after repeated use.

The foregoing problems particularly manifest themselves in the formation of the longitudinal heat seal(s), i.e., those that form the sides of the bag. The mechanism for making such longitudinal heat seals generally includes an electrically heated device such as a heated roller or an electrical wire wrapped around a nip roll or otherwise supported. Unlike the formation of the transverse heat seals, which are made intermittently while the moving web of film is not in motion, the longitudinal heat seals must be made while the film is in motion, i.e., moving in a downward direction. The dynamic nature of the formation of the longitudinal heat seals generally increases the complexity and maintenance requirements of the equipment used to make such heat seals. As a corollary, the reliability of the longitudinal heat seal equipment has generally proven to be less than that which would otherwise be desired.

Further compounding the problem is the high degree of precision required of the longitudinal heat seal equipment in comparison to the apparatus used to form the transverse heat seal. Generally, the transverse heat seal apparatus melts completely through the films to sever a completed bag from the film web. In the process, a top seal is formed on the completed bag while a bottom seal is formed for the next bag to be made. The nature of this operation permits a relatively large temperature window within which the transverse heat sealer can successfully operate. In contrast, the temperature of the longitudinal heat seal device must be more narrowly controlled so as not to burn through the films but, at the same time, to heat sufficiently to make a complete heat seal.

Therefore, the need exists for an automated method for repetitively and rapidly producing foam-in-place cushions which avoid the problems of longitudinal heat sealing.

### SUMMARY OF THE INVENTION

That need is met by the present invention, which, in one aspect, provides a method for enclosing a foamable composition in a flexible bag, comprising:
a. Providing two or more flexible films, each film comprising a first surface, a second surface and two longitudinal edges. Both of the films may further comprising at least one strip of a bonding material adhered to one or both surfaces of each film adjacent at least one of the two longitudinal edges thereof, or at least one of the films may further comprising two or more strips of bonding material adhered to one or both surfaces of the film with at least one of the two or more strips of bonding material being disposed adjacent to each of the two longitudinal edges of the film.
b. The films are formed into a tube having an inner surface and an outer surface, whereby the first surfaces of each of the films together establish the inner surface of the tube and the second surfaces of each of the films together establish the outer surface of the tube, the tube being formed by bringing together and overlapping a longitudinal edge from each film to a predetermined extent such that the bonding material bonds the first surface of one of the films to the second surface of the other film.
c. A predetermined amount of foamable composition is then introduced into the tube and the tube is converted into a closed bag such that the foamable composition is enclosed within the bag.

A related method for enclosing a foamable composition in a flexible bag comprises:
a. providing a flexible film comprising
   (1) two surfaces and two longitudinal edges, and
   (2) at least one strip of a bonding material adhered to one or both surfaces of the film adjacent at least one of the two longitudinal edges;
b. forming the film into a tube having inner and outer surfaces whereby one of the film surfaces establishes the inner surface of the tube and the other film surface establishes the outer surface of the tube, the tube being formed by bringing together and overlapping the longitudinal edges to a predetermined extent such that the strip of bonding material produces a bond between the inner and outer surfaces of the tube; and
c. introducing a predetermined amount of foamable composition into the tube and converting the tube into a closed bag such that the foamable composition is enclosed within the bag.

A further method for enclosing a foamable composition in a flexible bag comprises:
a. providing a flexible film comprising
   (1) a first surface and a second surface,
   (2) two longitudinal edges, and
   (3) at least one strip of a bonding material adhered to the first surface of the film adjacent at least one of the two longitudinal edges;
b. forming the film into a tube having an inner and an outer surface whereby the first surface of the film establishes the inner surface of the tube and the second surface of the film establishes the outer surface of the tube, the tube being formed by folding the film and bringing the longitudinal edges together such that the strip of bonding material produces a bond between portions of the first film surface; and
c. introducing a predetermined amount of foamable composition into the tube and converting the tube into a closed bag such that the foamable composition is enclosed within the bag.

An additional method for enclosing a foamable composition in a flexible bag comprises:
a. providing two or more flexible films, each film comprising a first surface, a second surface and two longitudinal edges,
   (1) both of the films further comprising at least one strip of a bonding material adhered to the first surface of each film adjacent at least one of the two longitudinal edges thereof, or
   (2) at least one of the films further comprising two or more strips of bonding material adhered to the first surface of the film with at least one of the two or more strips of bonding material being disposed adjacent to each of the two longitudinal edges;
b. forming the two or more films into a tube having an inner and an outer surface by juxtaposing the films with the first surface of each film in contact with one another and the longitudinal edges of each film substantially aligned with one another such that the strips of bonding material bond the first surfaces of each film to one another, the first surfaces of each of the films together establishing the inner surface of the tube and the second surfaces of each of the films together establishing the outer surface of the tube; and
c. introducing a predetermined amount of foamable composition into the tube and converting the tube into a closed bag such that the foamable composition is enclosed within the bag.

### BRIEF DESCRIPTION OF THE DRAWINGS

FIG. 1 is a schematic view of a process in accordance with the present invention in which a bag is formed from a pair of flexible films and a foamable composition is introduced into the bag as the bag is formed;
FIG. 2 is a perspective view of the process illustrated in FIG. 1;
FIG. 3 is a perspective view of a completed bag having a foamable composition therein as the composition expands within the bag;
FIG. 4 is a cross-sectional view of the bag being formed and filled with foamable composition as taken along lines 4-4 in FIG. 2,;
FIGS. 5 and 6 are detailed views of one of the longitudinal seals of the bag shown in FIG. 4, circled and designated as "6", with FIG. 5 showing the seal immediately after being formed and FIG. 6 showing the seal as the foamable composition expands; and
FIGS. 7-12 are similar to the cross-sectional view shown in FIG. 4 and schematically illustrate alternative embodiments of flexible bags made in accordance with the present invention.

### DETAILED DESCRIPTION OF THE INVENTION

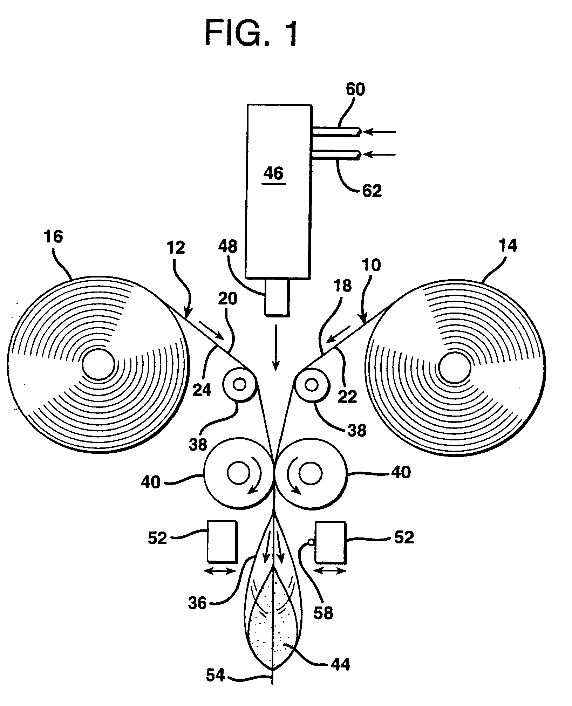

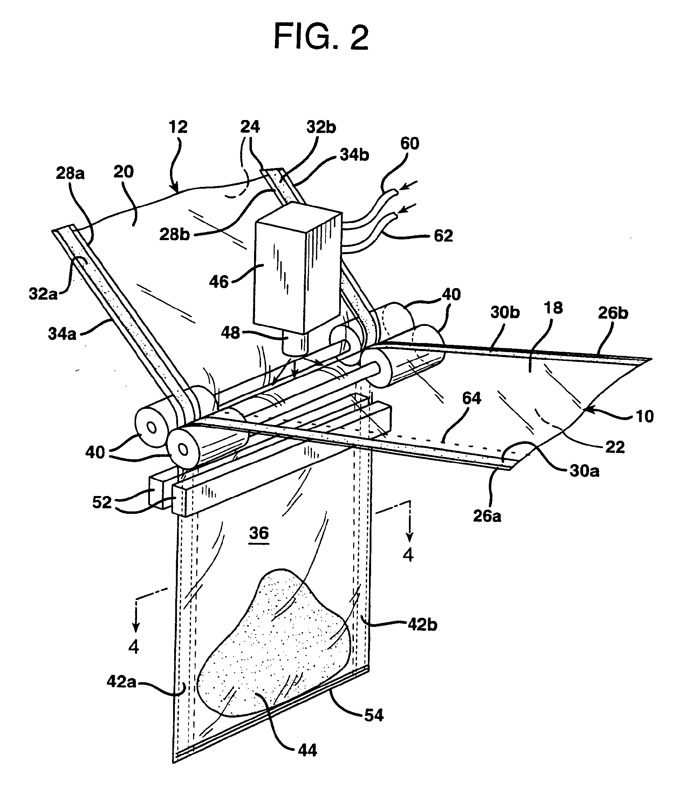

FIGS. 1 and 2 schematically illustrate a method in accordance with the present invention for enclosing a foamable composition in a flexible bag. Two or more flexible films 10 and 12 are provided from respective storage rolls 14 and 16 (shown in FIG. 1 only). Each of films 10 and 12 comprise respective first surfaces 18 and 20 and second surfaces 22 and 24. Film 10 also has two longitudinal edges 26a and 26b while film 12 has longitudinal edges 28a and 28b.

Instead of using heat sealing techniques to form longitudinal seals on the bag, one or more strips of a bonding material are provided on one or both surfaces of one or both films near the longitudinal edges thereof. The films are then brought together in such a way that the bonding strip(s) on one film are brought into contact with the desired region of the other film, usually near the longitudinal edge, and squeezed together to form a longitudinal seal. This is accomplished without the use of any heat sealing equipment as described above, although some heat may be applied to facilitate bonding, depending on the specific bonding material and films being employed. This aspect of the invention is discussed in further detail below.

Suitable flexible films in accordance with the invention may be formed from any polymeric material capable of being formed into a foam-in-bag cushion as described herein. Non-limiting examples include polyethylene homopolymers, such as low density polyethylene (LDPE) and high density polyethylene (HDPE), and polyethylene copolymers such as, e.g., ionomers, EVA, EMA, heterogeneous (Zeigler-Natta catalyzed) ethylene/alpha-olefin copolymers, and homogeneous (metallocene, single-cite catalyzed) ethylene/alpha-olefin copolymers. Ethylene/alpha-olefin copolymers are copolymers of ethylene with one or more comonomers selected from C₃ to C₂₀ alpha-olefins, such as 1-butene, 1-pentene, 1-hexene, 1-octene, methyl pentene and the like, in which the polymer molecules comprise long chains with relatively few side chain branches, including linear low density polyethylene (LLDPE), linear medium density polyethylene (LMDPE), very low density polyethylene (VLDPE), and ultra-low density polyethylene (ULDPE). Various other materials are also suitable such as, e.g., polypropylene homopolymer or polypropylene copolymer (e.g., propylene/ethylene copolymer), polyesters, polystyrenes, polyamides, polycarbonates, etc. The film(s) may be monolayer or multilayer films and can be made by any known coextrusion process by melting the component polymer(s) and extruding or coextruding them through one or more flat or annular dies.

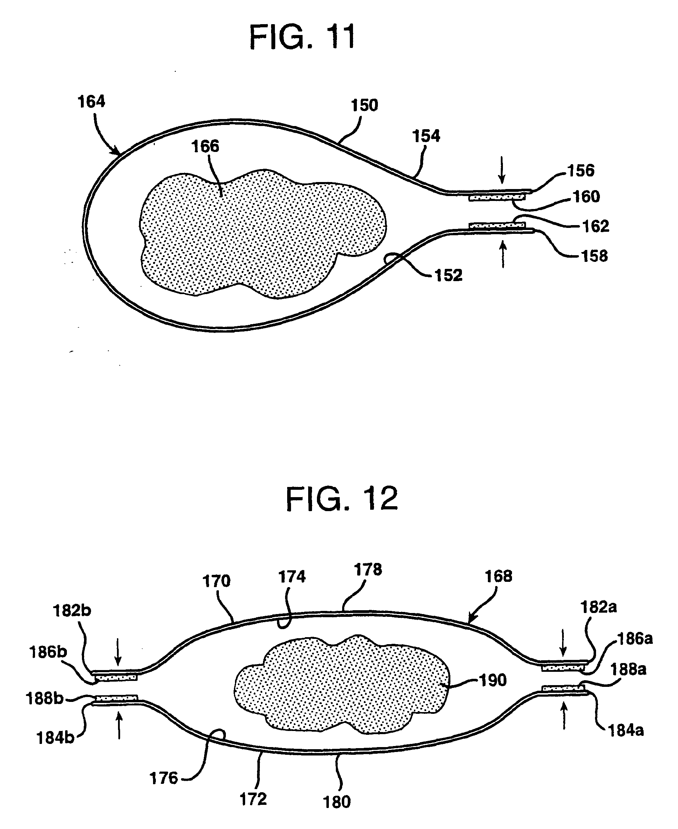

As illustrated in FIGS. 1-2, film 10 has two strips 30a and 30b of a bonding material adhered to first surface 18 and disposed adjacent to each of the two longitudinal edges 26a,b of film 10. Film 12 also has two strips 32a and 32b of a bonding material adhered to the film adjacent to each of the two longitudinal edges 28a,b. However, the bonding strips 32a,b of film 12 are adhered to second surface 24 thereof. This is preferably accomplished by providing film 12 with one or more, and preferably two, folds 34a and 34b spaced from and extending in a direction substantially parallel to respective longitudinal edges 28a,b. The reason for this will be explained below. However, it is to be understood that such folds are not a requirement, and that first surface 20 of film 12 can be bonded to first surface 18 of film 10 if desired (e.g., as illustrated in FIG. 12).

Although the bonding strips 30a,b and 32a,b are shown as being continuous with a substantially uniform width, any shape, configuration, or pattern may be employed, depending upon the particular packaging application in which the method of the present invention is utilized.

The films 10 and 12 are formed into a tube 36 by advancing the films over guide rolls 38 (shown in FIG. 1 only) and between nip rolls 40. The films are aligned such that bonding strip 30a of film 10 is aligned with bonding strip 32a of film 12 and bonding strip 30b of film 10 is aligned with bonding strip 32b of film 12. Nip rolls 40 squeeze the aligned bonding strips 30a/32a and 30b/32b together, causing them to bond to one another and thereby form longitudinal seals 42a and 42b on tube 36.

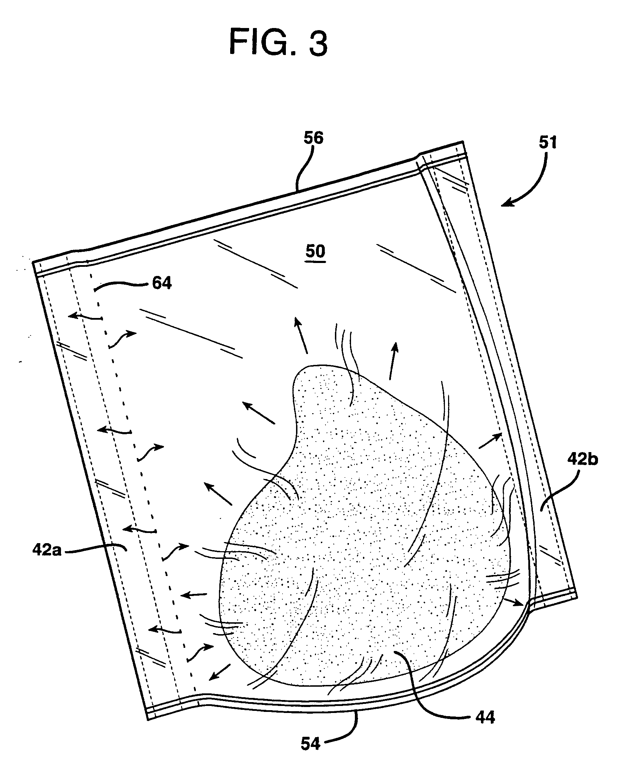

A predetermined amount of foamable composition 44 is introduced into tube 36 from dispenser 46, preferably as tube 36 is being formed, as represented by the downward-pointing arrows emanating from nozzle 48 of dispenser 46 and leading into tube 36. Once a predetermined amount of foamable composition 44 has been dispensed and a sufficient length of tube has been formed, the tube is converted into a closed bag 50 such that the foamable composition 44 is enclosed within such bag (see FIG. 3). Tube 36 may be converted into a closed bag in the manner described in the above-incorporated patents, i.e., by creating transverse heat-seals to close the top and bottom of the tube. For such purposes, a severing and sealing mechanism, shown schematically at 52, may be employed to create both closed bottom edge 54 and closed top edge 56. The severing and sealing mechanism may include at least one wire 58 or other electrical resistance device that can be heated sufficiently to melt through both of films 10 and 12 when the wire is pressed into contact with the films, which can be done by causing both halves of the mechanism 52 to converge on the films and squeeze the films therebetween. As this occurs, a current is sent through wire 58, causing it to heat and melt through tube 36 (i.e., both of films 10 and 12), thereby severing a completed bag 50 from tube 36. At the same time, the heat from wire 58 causes the films to weld together both below and above the wire; the weld below the wire forms the closed top edge 56 of a completed bag 50 and the weld above the wire forms the closed bottom edge 54 of the next bag to be formed, i.e., of tube 36.

Other techniques for forming transverse seals are possible, such as, e.g., employing two or more wires on one or both halves of the mechanism 52, with each wire performing a separate sealing or severing function, or employing transverse bonding strips.

In a preferred mode of operation, severing and sealing mechanism 52 initially creates closed bottom edge 54. Films 10 and 12 then advance through nip rolls 40 such that longitudinal seals 42a,b are formed as foamable composition 44 begins to be added to the resultant partially closed tube 36 from dispenser 46. Tube 36 continues to be formed and filled in a downward direction in this manner until a predetermined amount of foamable composition has been added to a predetermined length of tubing, at which time the tubing ceases to advance. Severing and sealing mechanism 52 then converges on the tubing to form closed top edge 56, sever the resultant bag 50, and form a closed bottom edge 54 on the next bag to be formed and filled.

The completed bag 50 enclosing foamable composition 44, collectively referred to as a cushion 51, is shown in FIG. 3. It will be understood that the term "bag" is used herein in a broad sense, to designate a sealed container made from flexible sheet material, and could include structures that are also referred to as "envelopes", "pouches", or other related terms, without departing from the scope of the claims. The term "bag" is nevertheless accurate and convenient and will be used throughout this specification.

As shown, the foamable composition 44 expands within the bag as indicated by the arrows radiating outwardly from the foaming and expanding composition. The flexible bag 50 enclosing the foamable composition 44 is thus ready to be placed in a packaging container along with an object to be packaged such that the cushion 51 conforms to the shape of the packaged object as the expanding foam 44 enclosed in the bag 50 forms around the packaged object and solidifies. The resulting cushion is a solidified foam enclosed in bag 50 and formed about the packaged object. Alternately, the cushion could be placed in a mold, so as to take a predetermined shape and then be used as a cushion in a box.

In a preferred embodiment, the foamable composition 44 includes a mixture of at least one polyol, which may be supplied to the dispensing device 46 via supply line 60, and at least one isocyanate, which may be supplied through supply line 62. As explained in the background section hereinabove, the polyol and isocyanate react to form a polyurethane foam in bag 50.

The reaction of isocyanate and polyol typically produces excess carbon dioxide gas and water vapor. Thus, it is often desirable to provide a vent in bag 50 to prevent ballooning of the bag, which may affect cushion 51's ability to conforming to the shape of the object to be packaged and/or the outer shipping container (e.g., box) in which the cushion and packaged object are contained. Vents may also be needed to allow atmospheric air to be drawn back into the bag and fill the cells in the foam. If the bag prevents transmission of air into the foam, the cells of the foam may collapse as gas within the cells (from the initial foaming reaction) cools and contracts.

Suitable venting may be provided by including one or more perforations 64 in film 10 and/or film 12. Such perforations may be formed in film 10 and/or film 12 prior to placing the films on storage roll 14 and/or 16. Alternatively, a mechanism, such as a rotating wheel with radially extending perforations, may be included with the bag making and filling apparatus shown in FIGS. 1 and 2 for producing the perforations in series with the production of the cushion 51, e.g., between the storage rolls 14 and/or 16 and guide rolls 38. As illustrated, perforations 64 extend in a series that is spaced from and parallel to longitudinal edge 26a of film 10. In this manner, gas can escape through such perforations from cushion 51 as the foamable composition 44 expands within bag 50. The escaping gas is represented by the arrows leading from perforations 64 in cushion 51. Instead or in addition, perforations can be included in film 12 and may be present in any desired pattern, e.g., they may extend in series transversely across the top of the cushion.

Other techniques for providing vents in the cushion include cutting slits in one or both films or periodically interrupting one or both longitudinal seals 42a,b, e.g., by discontinuously adhering one or both bonding strips 30a,b or 32a,b to film 10 and/or film 12.

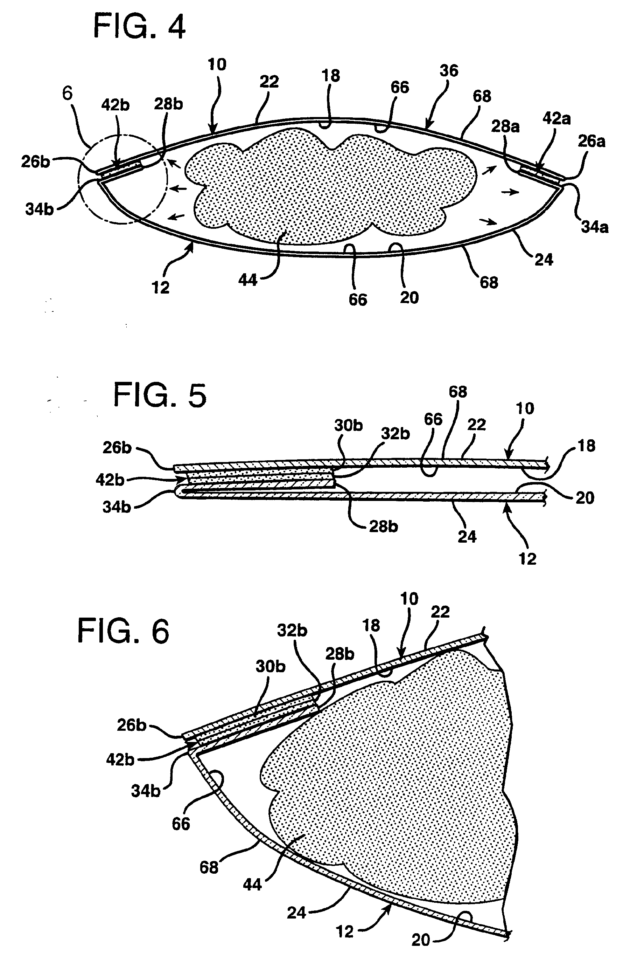

Turning now to FIG. 4, which is a cross-sectional view of the tube 36 as it is being filled with foamable composition 44 (taken along lines 4-4 in FIG. 2), the longitudinal seals 42a,b will be explained in greater detail. Films 10 and 12 are formed into tube 36 so that tube 36 has an inner surface 66 and an outer surface 68. Thus, the first surfaces 18 and 20 of each of films 10 and 12 together establish the inner surface 66 of tube 36 while the second surfaces 22 and 24 of each of the films 10 and 12 together establish the outer surface 68 of the tube. The inner surface 66 of the tube is in contact with the foamable composition 44 while the outer surface 68 will be in contact with an object to be packaged and, typically, a shipping container in which both the resultant cushion and packaged object are contained.

In the embodiment shown in FIG. 4, tube 36 is formed by bringing together and overlapping a longitudinal edge from each film to a predetermined extent such that the bonding material bonds the first surface of one of the films to the second surface of the other film. Thus, longitudinal edge 26a of film 10 is overlapped with edge 28a of film 12 while edge 26b of film 10 is overlapped with edge 28b of film 12. Further, because of longitudinal folds 34a,b, the second surface 24 of film 12 is bonded to the first surface 18 of film 10. That is, bonding strips 32a,b, which are adhered to second surface 24 of folded film 12, are bonded to bonding strips 30a,b, which are in adherence with first surface 18 of film 10, thereby forming longitudinal seals 42a,b.

This is illustrated more clearly in FIGS. 5 and 6, which show the circled portion of FIG. 4 in greater detail. FIG. 5 shows the circled portion of FIG. 4 just after bonding strips 30b and 32b have been bonded together in nip rolls 40. Again, due to the fold 34b in film 12 and the placement of bonding strip 32b on second surface 24 thereof (and similarly due to the placement of bonding strip 32a on second surface 24), the second surface 24 of film 12, which forms part of the outer surface 68 of tube 36, is bonded to the first surface 18 of film 10. Thus, although both of first surfaces 18 and 20 of films 10 and 12 together form the inner surface 66 of tube 36, part of the second (outer) surface 24 of film 12 is bonded to the first surface 18 of film 10. For this reason, when the foamable composition 44 expands in tube 36 (and later in bag 50) as shown in FIG. 6, the resultant longitudinal seal 42b (as well as 42a) is stressed in a shearing or lateral mode, as opposed to a peeling mode. Such a "lap seal" for longitudinal seals 42a,b is generally preferred to a "fin seal," which is stressed in a peeling mode, because less bond strength is required for the former than the latter.

A number of suitable materials may be used for bonding strips 30a,b and 32a,b. Generally, the bonding material used in accordance with the present invention may be any material capable of forming a longitudinal seal in the manner described herein that bonds with sufficient strength to prevent the longitudinal seals from opening during the expansion of the foamable composition. That is, the bond strength provided to the longitudinal seal by the bonding material, whether the longitudinal seal is a 'lap' seal as described above or a 'fin' seal as described below, should be sufficient to overcome the force exerted by the expanding foamable composition at the longitudinal seals. As the foam expands, it exerts a force against the bonds holding the seals closed, which would otherwise force the seals to open but for the strength of the bonding material holding the seals closed. In general, less bond strength is required to hold a lap seal closed than required for a fin seal, all other conditions being the same.

One class of suitable bonding materials that may be used to form the longitudinal seals in accordance with the present invention are generally referred to as "cold seal adhesives" or "cohesives." These materials are cold sealable (i.e., do not require heat for bonding but some heating may be employed in certain cases if desired) and pressure-sensitive, and exhibit cohesive bonding when placed under pressure and in contact with the same or a similar material. That is, cohesive materials bond strongly with themselves when two separate coatings of a cohesive material are squeezed together to form a seal or other closure, but weakly or not at all with different materials. This is what generally distinguishes a cohesive material from a traditional adhesive material, i.e., an adhesive will typically bond to a dissimilar material whereas a cohesive generally will not, but will form a strong bond only with itself.

Cold seal adhesives, i.e., cohesive materials, are typically present as an aqueous emulsion, e.g., a latex, generally comprise natural or synthetic rubbers, and may be based upon one or more of the following chemistries: polyisoprene, natural rubber, neoprene, styrene butadiene rubber, and tackified elastomers. The foregoing list is not exhaustive or limiting, as other suitable cohesive materials may also be used. Specific examples of commercially-available cohesive materials include 211-939 Nip-Weld, a "waterbased blend of elastomer emulsions" from ATO Findley; 318 Flexweld Cohesive, a "water-borne, modified synthetic rubber adhesive" from Imperial Adhesives Inc.; CH105, a "natural latex cohesive" from Valpac, Inc.; and NP4129, a "synthetic rubber cold seal" from HB Fuller.

When a cohesive material is used for bonding strips 30a,b and 32a,b, it is preferred, but not necessary, that the strips to be bonded together (i.e., 30a/32a and 30b/32b) be of the same material and of substantially matching shape and size.

Prior to use, films 10 and 12 are generally handled, transported, and dispensed in the form of rolls 14 and 16 as noted above. Depending upon the specific cohesive material selected, it may be desirable to apply a release coating or other treatment to second surfaces 22 and 24 (on the "back side" part of surface 24, i.e., between longitudinal folds 34a,b, that does not contain bonding strips 32a,b) to prevent any undue adhesion or blocking between those surfaces and the bonding strips 30a,b and 32a,b when the films are contained in rolls as shown in FIG. 1. Examples of such coatings are organic coatings and varnishes including acrylics, silicones, silanes, fluorocarbons, and waxes, e.g., V115896 solvent-based overprint varnish available from Sun Chemical Corp.

On the other hand, it may also be desirable to coat or treat the film surfaces to which the bonding strips 30a,b and 32a,b are applied (i.e., first surface 18 and the "front side" part of surface 24 between longitudinal folds 34a,b and respective longitudinal edges 28a,b) in order to improve or enhance adhesion of the bonding strips to such film surfaces if such is deemed necessary or desirable. Preferred treatments to enhance adhesion of a cohesive or other bonding material to the film surface may be referred to as "reactive surface modification," whereby the surface of a film is chemically altered in order to incorporate reactive species onto such film surface in order to improve the ability of such surface to be coated with another material. Specific examples of reactive surface modification include corona treatment, plasma (ionized gas) treatment, flame treatment, and chemical treatments.

Other suitable bonding materials for forming longitudinal seals in accordance with the present invention include adhesive materials, including "pressure sensitive adhesives" (PSAs), such as those based on acrylic, ethylene/vinyl acetate, and ethylene/styrene polymers, and also reactive/thermoset adhesives, which are produced *in situ* from a reaction between two or more precursors, such as two-part epoxy resins.

PSAs may include water-based adhesives, such as polymer latexes based on natural rubber, synthetic rubber (e.g., SBR, EPDM), or thermoplastic acrylics, urethanes, polyesters, etc. Examples of water-based PSAs include GME 2628, GME 2896, and GME 2670 from Solutia. Solvent -based adhesives are also available from Solutia, including GMS 2480 and GMS 9801. Hot melt adhesives, such as HL2566, HM2170B, HL2203, and HMI1597 from H.B. Fuller, and silocone-based adhesives may also be used. Surface coatings, such as polyvinylbutyral, and reactive surface modification may be employed if desired to enhance bonding of the PSA to the film surface.

When pressure sensitive adhesives are used for the bonding strips, a strip of release paper or film may need to be applied over the strip prior to bonding, or a release coating could be applied to the back side of the film (i.e., a coating to which the adhesive has little or no affinity), so that the film can be wound into a roll and then unwound without being prevented from doing so by the adhesive. Any release paper(s) would be peeled prior to bonding longitudinal edges of the film(s) to form a tube. An advantage of a pressure sensitive adhesive is that only one of two bonded surfaces needs to have a bonding strip of such material applied thereto.

When reactive or thermoset adhesives are used, one of the reactive components can be coated on one surface to be bonded and the other component may be bonded on the other surface to be bonded, e.g., bonding strip 30a could comprise one precursor while bonding strip 32a could comprise the other precursor. When the two strips are pressed together in nip rolls 40, the two precursor components react and adhere together, thereby forming longitudinal seal 42a. In order to prevent premature reaction, one or both of the precursors may be encapsulated in a protective coating, which coating is ruptured upon application of pressure, e.g., when the two films are pressed together, thereby permitting the bonding reaction to occur.

As a further alternative, an adhesive or cohesive material may be used that becomes effective when exposed to a triggering energy source, e.g., radiated energy or an externally-applied chemical agent.

The adhesive or cohesive bonding material may be applied to films 10 and 12 either prior to being wound on rolls 14 and 16, or as the films are unwound from the rolls and prior to being bonded together in nip rolls 40. The bonding material may be applied in any desired pattern, e.g., as strips as shown, via any suitable, conventional coating method, including gravure coating, flexo coating, slot die coating, spraying (e.g., with a low shear spray head), apply with a sponge applicator, etc. After application, the coating is preferably dried by blowing air, preferably warm air, onto the coating.

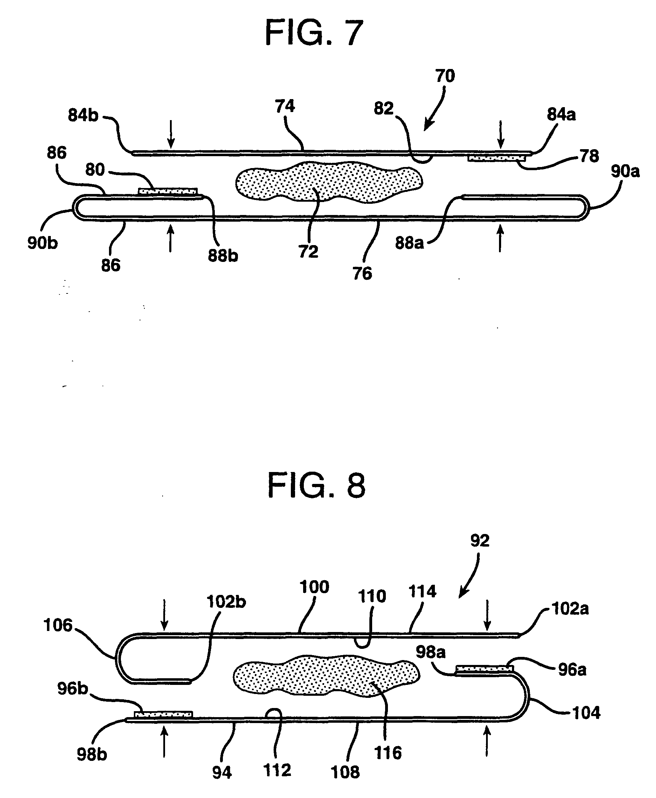

Referring now to FIGS. 7-12, several alternative embodiments of the invention will be described. Each of the views shown in FIGS. 7-12 is similar to that shown in FIG. 4, except that, for clarity, the longitudinal seals are shown just before being bonded together. In each case, a tube is being formed and a foamable composition is being added thereto via the same or a similar apparatus as shown in FIGS. 1 and 2.

In the embodiment illustrated in FIGS. 1-6, a cohesive or two-component adhesive bonding material has been shown such that two strips of bonding material were needed to form each longitudinal seal. In FIG. 7, tube 70 is being formed and filled with foamable composition 72 by bonding film 74 to film 76. Both of films 74 and 76 each include only one strip 78 and 80, respectively, of a bonding material adhered to one surface of each film. Bonding strip 78 is adhered to the first surface 82 of film 74 adjacent longitudinal edge 84a thereof. Bonding strip 80 is adhered to second surface 86 of film 76 adjacent longitudinal edge 88b thereof. When bonding strips 78 and 80 each comprise a pressure sensitive adhesive, strip 78 bonds longitudinal edges 84a and 88a of films 74 and 76 together without the need for a second bonding strip on the second surface 86 of film 76 adjacent longitudinal edge 88a. Similarly, strip 80 bonds edges 84b and 88b together without the need for a counterpart bonding strip on the first surface 82 of film 74 adjacent edge 84b. Of course, more than one bonding strip could be attached to one or both surfaces of films 74 and/or 76 if desired.

Bonding may be accomplished by applying external pressure to the films in the direction and location indicated by the arrows, e.g., via a pair of nip rolls as shown in FIGS. 1 and 2 at 40. As with film 12, film 76 includes two longitudinal folds 90a,b such that bonding strips 78 and 80 bond the first surface 82 of film 74 (forming part of the inner surface of tube 70) to the second surface 86 of film 76 (forming part of the outer surface of tube 70), whereby the resultant longitudinal seals are lap seals that are stressed in a shearing mode rather than in a peeling mode upon expansion of the foamable composition 72. Finally, whereas the width of film 12 between the longitudinal folds 34a,b is substantially the same as the width of film 10 between the longitudinal edges 26a,b (FIG. 4), the width of film 76 between longitudinal folds 90a,b is greater than the width of film 74 between longitudinal edges 84a,b.

In tube 92 shown in FIG. 8, component film 94 includes two strips 96a,b of a bonding material disposed adjacent to each of the two longitudinal edges 98a,b, respectively, of film 94 while film 100 has no bonding strips. In this embodiment, bonding strips 96a,b would preferably comprise a pressure sensitive adhesive such that mating bonding strips are not required adjacent longitudinal edges 102a,b of film 98 in order for the two films to be formed into a tube. Of course, if desired, one or more bonding strips could be provided on film 100 and/or additional bonding strips could be included on one or both surfaces of film 94.

While in previously discussed embodiments, one of the two films comprising the tube included two folds while the other film had none, in the embodiment shown in FIG. 8, each of films 94 and 100 include a respective fold 104 and 106 spaced from and extending in a direction substantially parallel to longitudinal edges 98a and 102b, respectively. Thus, when external pressure is applied to the longitudinal edges in order to form longitudinal seals, as indicated by the arrows in FIG. 8, the second surface 108 of film 94 (forming part of the outer surface of tube 92) is bonded to first surface 110 of film 100 (forming part of the inner surface of tube 92) at respective longitudinal edges 98a and 102a via bonding strip 96a. The reverse of this occurs at bonding strip 96b as the first (inner) surface 112 of film 94 is bonded to the second (outer) surface 114 of film 100. In this manner, at each resultant longitudinal seal formed by bonding strips 96a,b, lap seals are created as the first surface of one of films 94 and 100 is bonded to the second surface of the other film. That is, since the second surfaces 108 and 114 together form the outer surface of tube 92 and the first surfaces 110 and 112 together form the inner surface of the tube, the resultant lap seals will be stressed in a shearing mode upon expansion of the foamable composition 116 within the enclosed bag formed by tube 92.

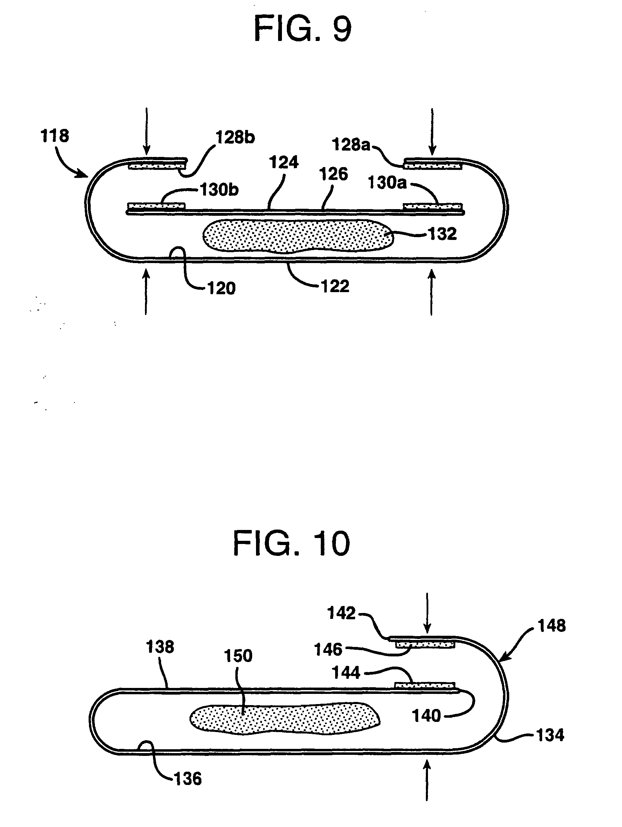

Tube 118 shown in FIG. 9 is similar to tube 36 illustrated in FIG. 4 except that the first (inner) surface 120 of folded film 122 is bonded to the second (outer) surface 124 of non-folded film 126 via bonding strips 128a,b adhered to first surface 120 of film 122 and bonding strips 130a,b adhered to second surface 124 of film 126. The resultant longitudinal seals formed by urging strips 128a/130a and 128b/130b together as shown are lap seals and therefore stressed in a shearing mode upon expansion of foamable composition 132.

It should be noted that, with respect to all of the embodiments described and illustrated herein, one or both films forming the bags may have additional folds to form gussets as disclosed in the above-referenced U.S. Pat. No. 5,027,583. Gussets may be desired in certain instances in that they allow for an increased volume of foam that may be contained within the bag.

FIG. 10 schematically illustrates a further alternative embodiment of the invention in which the tube/bag enclosing a foamable composition is formed from a single film. A flexible film 134 is provided, comprising two surfaces 136 and 138 and two longitudinal edges 140 and 142. Film 134 also includes at least one strip of a bonding material adhered to one or both surfaces 136, 138 adjacent at least one of the two longitudinal edges 140, 142. As presently illustrated, the film contains two bonding strips 144 and 146, each of which may comprise a cohesive material or adhesive material (e.g., a two-part epoxy) as discussed above.

Film 134 is formed into a tube 148 having inner and outer surfaces whereby film surface 136 establishes the inner surface of the tube and film surface 138 establishes the outer surface of the tube. As shown, the tube is formed by bringing together and overlapping longitudinal edges 140 and 142 to a predetermined extent such that the strips 144 and 146 of bonding material produce a bond between the inner and outer surfaces 136 and 138 of the tube. A lap seal is thereby produced at longitudinal edges 140 and 142, which will be stressed in a shearing mode when foamable composition 150 expands, such composition being added to the tube prior to the tube being converted into a bag (i.e., by forming closed top and bottom edges similar to closed edges 54 and 56 as discussed above). The longitudinal lap seal may be accomplished by applying external pressure to the tube 148 in the direction and location indicated by the arrows, e.g., via a single pair of nip rolls as described above.

Referring now to FIG. 11, another method in accordance with the present invention will be described. This method is similar to the method described immediately above, in that only one flexible film folded upon itself is used to form a tube and then bag for enclosing a foamable composition, except that a "fin" type seal is used to form the longitudinal seal. The flexible film 150 comprises a first surface 152, a second surface 154, two longitudinal edges 156 and 158, and at least one strip of a bonding material adhered to the first surface 152 of the film adjacent at least one of the two longitudinal edges 156, 158. As illustrated, two strips 160 and 162 of bonding material are adhered to first surface 152 adjacent each of respective longitudinal edges 156 and 158.

Film 150 is formed into a tube 164 having an inner and an outer surface whereby the first surface 152 of film 150 establishes the inner surface of the tube and the second surface 154 of film 150 establishes the outer surface of the tube. Tube 164 is formed by folding film 150 onto itself and bringing longitudinal edges 156 and 158 together such that strips 160 and 162 of bonding material produce a bond, i.e., a fin-type longitudinal seal, between portions of the first film surface 152 forming the inner surface of the tube. When foamable composition 166 is introduced into tube 164 and the tube is then converted into a bag to enclose the foamable composition therein, the expanding foam stresses the resultant fin seal in a peeling mode, which will typically require a greater bond strength to maintain seal integrity than a lap-type longitudinal seal (as shown in FIGS. 4-10).

Tube 168 illustrated in FIG. 12 is similar to tube 164 in that fin-type seals are employed, except that tube 168 is formed from two separate flexible films 170 and 172. Each of films 170 and 172 comprise respective first surfaces 174 and 176, second surfaces 178 and 180, and two longitudinal edges 182a,b and 184a,b. As with the two-film embodiments shown, e.g., in FIGS. 7-9, two options are possible:
(1) both of films 170 and 172 may include at least one strip of a bonding material adhered to the first surfaces 174, 176 of each film adjacent at least one of the two longitudinal edges 182a,b and 184a,b thereof, or
(2) at least one of films 170 and 172 may include two or more strips of bonding material adhered to the first surface 174 or 176 of the film with one of the two or more strips of bonding material being disposed adjacent to each of the two longitudinal edges 182a,b or 184a,b.

As illustrated, both of films 170 and 172 each contain two bonding strips 186a,b and 188a,b, respectively, adjacent each of the two respective longitudinal edges 182a,b and 184a,b. Films 170 and 172 are formed into tube 168 having an inner and an outer surface by juxtaposing the two films such that the first surfaces 174 and 176 of each film are brought in contact with one another and the longitudinal edges 182a/184a and 182b/184b of each film are substantially aligned with one another. In this manner, bonding strips 186a/188a and 186b/ 188b bond the first surfaces 174, 176 of each film 170, 172 to one another, with the first surfaces 174, 176 of each of the films together establishing the inner surface of tube 168 and the second surfaces 178, 180 of each of the films together establishing the outer surface of the tube. A predetermined amount of foamable composition 190 is then introduced into the tube and the tube is converted into a closed bag in the manner described above such that the foamable composition 190 is enclosed within the bag. When the composition 190 expands into a foam, the resultant fin seals at longitudinal edges 182a/184a and 182b/184b are stressed in a peeling mode.

The foregoing description of preferred embodiments of the invention has been presented for purposes of illustration and description. It is not intended to be exhaustive or to limit the invention to the precise form disclosed, and modifications and variations are possible in light of the above teachings or may be acquired from practice of the invention.

## Claims

1. A method for enclosing a foamable composition in a flexible bag, comprising:
a. providing two or more flexible films, each film comprising a first surface, a second surface and two longitudinal edges,
(1) both of said films further comprising at least one strip of a bonding material adhered to one or both surfaces of each film adjacent at least one of said two longitudinal edges thereof, or
(2) at least one of said films further comprising two or more strips of bonding material adhered to one or both surfaces of said film with at least one of said two or more strips of bonding material being disposed adjacent to each of said two longitudinal edges of said film;
b. forming said two or more films into a tube having an inner surface and an outer surface, whereby the first surfaces of each of said films together establish the inner surface of said tube and the second surfaces of each of said films together establish the outer surface of said tube, said tube being formed by bringing together and overlapping a longitudinal edge from each film to a predetermined extent such that said bonding material bonds the first surface of one of said films to the second surface of the other film; and
c. introducing a predetermined amount of foamable composition into said tube and converting said tube into a closed bag such that said foamable composition is enclosed within said bag.

2. The method of claim 1, wherein said strip of bonding material comprises an adhesive material.

3. The method of claim 1, wherein said strip of bonding material comprises a cohesive material.

4. The method of claim 1, wherein at least one of said flexible films further comprises at least one fold spaced from and extending in a direction substantially parallel to said longitudinal edges.

5. The method of claim 1, wherein each of said flexible films further comprises at least one fold spaced from and extending in a direction substantially parallel to said longitudinal edges.

6. The method of claim 1, wherein said foamable composition comprises at least one polyol and at least one isocyanate.

7. The method of claim 6, further including the step of providing a vent in said bag.

8. A foamable composition enclosed in a flexible bag formed by the method of claim 1.

9. A foam enclosed in a flexible bag formed by the method of claim 1.

10. A method for enclosing a foamable composition in a flexible bag, comprising:
a. providing a flexible film comprising
(1) two surfaces and two longitudinal edges, and
(2) at least one strip of a bonding material adhered to one or both surfaces of said film adjacent at least one of said two longitudinal edges;
b. forming said film into a tube having inner and outer surfaces whereby one of said film surfaces establishes said inner surface of said tube and the other film surface establishes said outer surface of said tube, said tube being formed by bringing together and overlapping said longitudinal edges to a predetermined extent such that said strip of bonding material produces a bond between said inner and outer surfaces of said tube; and
c. introducing a predetermined amount of foamable composition into said tube and converting said tube into a closed bag such that said foamable composition is enclosed within said bag.

11. The method of claim 10, wherein said strip of bonding material comprises an adhesive material.

12. The method of claim 10, wherein said strip of bonding material comprises a cohesive material.

13. The method of claim 10, wherein said film has at least one fold spaced from and extending in a direction substantially parallel to said longitudinal edges.

14. The method of claim 10, wherein said foamable composition comprises at least one polyol and at least one isocyanate.

15. The method of claim 14, further including the step of providing a vent in said bag.

16. A foamable composition enclosed in a flexible bag formed by the method of claim 10.

17. A foam enclosed in a flexible bag formed by the method of claim 10.

18. A method for enclosing a foamable composition in a flexible bag, comprising:
a. providing a flexible film comprising
(1) a first surface and a second surface,
(2) two longitudinal edges, and
(3) at least one strip of a bonding material adhered to said first surface of said film adjacent at least one of said two longitudinal edges;
b. forming said film into a tube having an inner and an outer surface whereby said first surface of said film establishes said inner surface of said tube and said second surface of said film establishes said outer surface of said tube, said tube being formed by folding said film and bringing said longitudinal edges together such that said strip of bonding material produces a bond between portions of said first film surface; and
c. introducing a predetermined amount of foamable composition into said tube and converting said tube into a closed bag such that said foamable composition is enclosed within said bag.

19. A method for enclosing a foamable composition in a flexible bag, comprising:
a. providing two or more flexible films, each film comprising a first surface, a second surface and two longitudinal edges,
(1) both of said films further comprising at least one strip of a bonding material adhered to the first surface of each film adjacent at least one of said two longitudinal edges thereof, or
(2) at least one of said films further comprising two or more strips of bonding material adhered to the first surface of said film with at least one of said two or more strips of bonding material being disposed adjacent to each of said two longitudinal edges;
b. forming said two or more films into a tube having an inner and an outer surface by juxtaposing said films with the first surface of each film in contact with one another and the longitudinal edges of each film substantially aligned with one another such that said strips of bonding material bond said first surfaces of each film to one another, said first surfaces of each of said films together establishing the inner surface of said tube and said second surfaces of each of said films together establishing the outer surface of said tube; and
c. introducing a predetermined amount of foamable composition into said tube and converting said tube into a closed bag such that said foamable composition is enclosed within said bag.
